# EUROPEAN PATENT APPLICATION

(11) **EP 2 481 768 A2**
(43) Date of publication of application: **01.08.2012**
(21) Application number: 12165209.3
(22) Date of filing: 10.07.2009
(51) Int. Cl.: C08J 7/04, C09K 3/10, C09D 5/22, C09D 133/16, B64C 1/12, B64C 1/14, B64F 5/00, F16J 15/14

(54) **Aircraft sealant**

(30) Priority: 11.07.2008 US 79979 P
(62) Divisional of application: 09777110.9
(71) Applicant: W.L. Gore & Associates GmbH, 85640 Putzbrunn (DE)
(72) Inventor: Wiesemann, Amadeus, 91126 Rednitzhembach (DE)
(74) Representative: Shanks, Andrew

(57) **Abstract**

A sealant made of expanded polytetrafluoroethylene has a coating of an active hydraulic fluid repellent component and an indicator, the sealant having a first uncompressed state and a second compressed state, wherein the sealant is repellent to hydraulic fluid in both the first uncompressed state and the second compressed state.

## Description

### CROSS REFERENCE TO RELATED APPLICATION

This application claims the benefit of commonly owned and copending U. S. Provisional Application No. 61/079,979 filed on July 11, 2008.

### FIELD OF THE INVENTION

This invention relates to aircraft sealants, and more particularly, to an aircraft sealant that is resistant to hydraulic fluid and oils.

### BACKGROUND OF THE INVENTION

Aircraft sealants are used in a variety of locations on an airplane frame to provide protection against corrosion, water ingress, and other environmental influences. Sealants are used to seal panels on aircraft such as upper and lower wing access panels, exterior fuselage panels, access doors, windshields, antennae and floor boards on military and commercial fixed-winged and rotary-dashed winged aircrafts, horizontal stabilizer and elevator access panels, vertical fin and rudder access panels, wing pod access panels, and landing lights.

One known aircraft gasket is made of rubber. Rubber has certain disadvantages, however. A preferred gasket material is polytetrafluoroethylene (PTFE). Unlike rubber gaskets, PTFE does not age or become hard and brittle. Degrading rubber gaskets harden, crack, and can fall into a fuel tank creating a flight hazard and causing a longer maintenance cycle. PTFE does not have these problems.

In applications where the aircraft sealant is likely to be exposed to fuel or oil, a version of PTFE known as expanded PTFE (ePTFE) may be used where the ePTFE is partially or completely Impregnated with, for example, silicone. The silicone-Impregnated ePTFE provides good sealing properties and is an efficient liquid barrier for fuels and oils.

In some specific application, however, it has been noted that even PTFE gaskets can be penetrated by certain hydraulic fluids such as hydrocarbon hydraulic fluid, phosphate ester hydraulic fluid, and even ester based engine oils. The hydraulic fluids or oils may spill or leak onto the gasket during installation, for example. The fluid penetrates the gasket, which could influence gasket material properties and creates a displeasing aesthetic effect. In addition, the contaminated gasket might cause cross contamination in aircraft assembly areas. An aircraft sealant resistant to hydraulic fluid is desirable.

### SUMMARY OF THE INVENTION

The present invention provides an apparatus comprising a first aircraft panel, a second aircraft panel joined to the first aircraft panel at a joint, and a sealant disposed at said joint, wherein the sealant comprises expanded polytetrafluoroethylene having a coating comprising polyperfluoromethacrylate and a fluorescent indicator.

Preferably, the sealant has a first uncompressed state and a second compressed state, wherein the sealant is resistant to hydraulic fluid in both said first uncompressed state and the second compressed state.

In another aspect, the invention provides a method of producing an aircraft sealant comprising the steps of providing an expanded polytetrafluoroethylene substrate, preparing a solution of polyperfluoromethacrylate in a solvent combined with a fluorescent indicator in a cosolvent different from the solvent, coating the substrate with the solution, and heat-drying the substrate and solution coating.

In its broadest aspect, the invention provides a stable coating system comprising an active compound and an indicator, wherein the indicator is durably present (for at least two months) in said coating system.

### BRIEF DESCRIPTION OF THE DRAWING

Fig. 1 is a side schematic view of an exemplary embodiment of one aspect of the present invention.
Fig. 2 is a schematic view of an exemplary process for making an exemplary embodiment of the present invention.
Fig. 3 shows results of repellency tests for certain examples of the present invention and comparative examples.
Fig. 4 shows results of repellency tests for certain examples of the present invention and comparative examples in the form of a rating system.
Fig. 5a is an illustration of a robustness/repellency test mechanism.
Fig. 5b shows results of repellency tests for certain examples of the present invention and comparative examples using the robustness/repellency test mechanism of Fig. 5a.
Fig. 6a is a side view of an edge protection test mechanism for a non-compressed sample.
Fig. 6b is a front view of an edge protection test mechanism for a non-compressed sample.
Fig. 6c shows results of repellency tests for certain examples of the present invention and comparative examples using the edge protection test mechanism of Figs. 6a and 6b.
Fig. 7a is a side view of an edge protection test mechanism for a compressed sample.
Fig. 7b is a front view of an edge protection test mechanism for a compressed sample.
Fig. 7c shows results of repellency tests for certain examples of the present invention and comparative examples using the edge protection test mechanism of Figs. 7a and 7b.

### DETAILED DESCRIPTION OF THE INVENTION

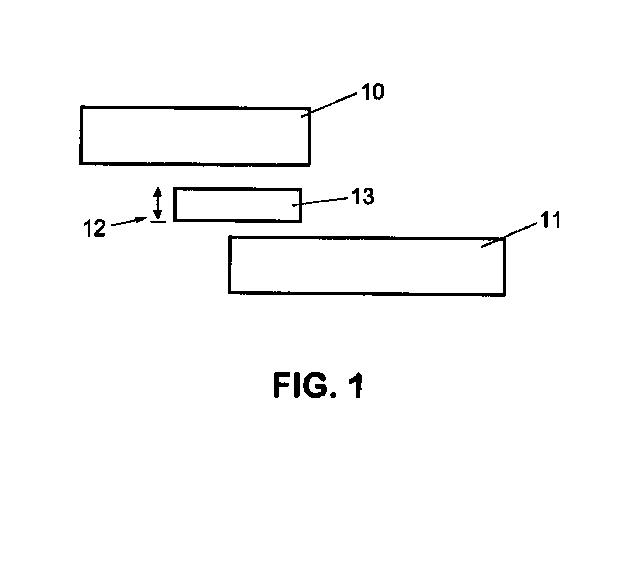

Figure 1 Illustrates an embodiment of the invention. A first aircraft portion 10 is joined to a second aircraft portion 11 to form a joint 12. Disposed at joint 12 is aircraft sealant 13. Aircraft sealant 13 may be disposed in the joint 12 between the first and second aircraft portions, or over the joint 12. Aircraft sealant 13 has an uncompressed state before it is placed between the aircraft portions, and is pressed into a compressed state in use.

The aircraft sealant of the present invention is a made of a unique composition designed to render the sealant resistant to hydraulic fluids as well as provide an efficient detection mechanism for ensuring hydraulic fluid resistance. The basis of the sealant is an ePTFE structure. Exemplary suitable ePTFE sealant material is available from W.L. Gore & Associates under the tradename GORE™ SKYFLEX®. The ePTFE provides strength, conformability, and environmental stability to the sealant. In alternative embodiments, ePTFE is Imbibed with silicone to help resist fuel ingress into aircraft compartments.

The ePTFE is coated with a low surface energy compound that repels polar and non-polar liquids. Preferably, this compound is polyperfluoromethacrylate. An exemplary suitable polyperfluoromethacrylate is available from Cytonix under the tradename Fluoropel PFC 604AFA. For application to the ePTFE, the polyperfluoromethacrylate is preferably dissolved in a solvent. This solvent is an organic solvent with low polarity, preferably a fluorinated solvent. An exemplary suitable solvent is hydrofluoroether, which is a mixture of methyl nonafluorobutyl and methyl nonafluoroisobutyl ethers in ratios of 30-50% and 50-70%. respectively. Fluoropel PFC 604AFA is typically a solution of polyperfluoromethacrylate dissolved in hydrofluoroether. An exemplary suitable hydrofluoroether is available from 3M under the tradename Novec HFE 7100. Preferably, the polyperfluoromethacrylate solution is about 4% polyperfluoromethacrylate and about 96% hydrofluoroother, although lower concentrations (below 4% are effective).

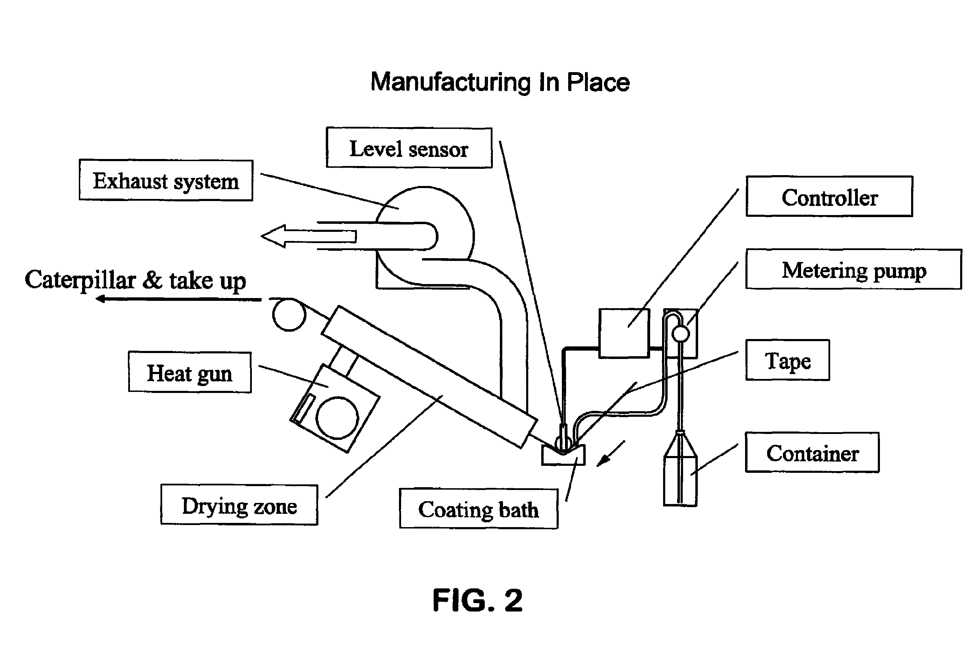

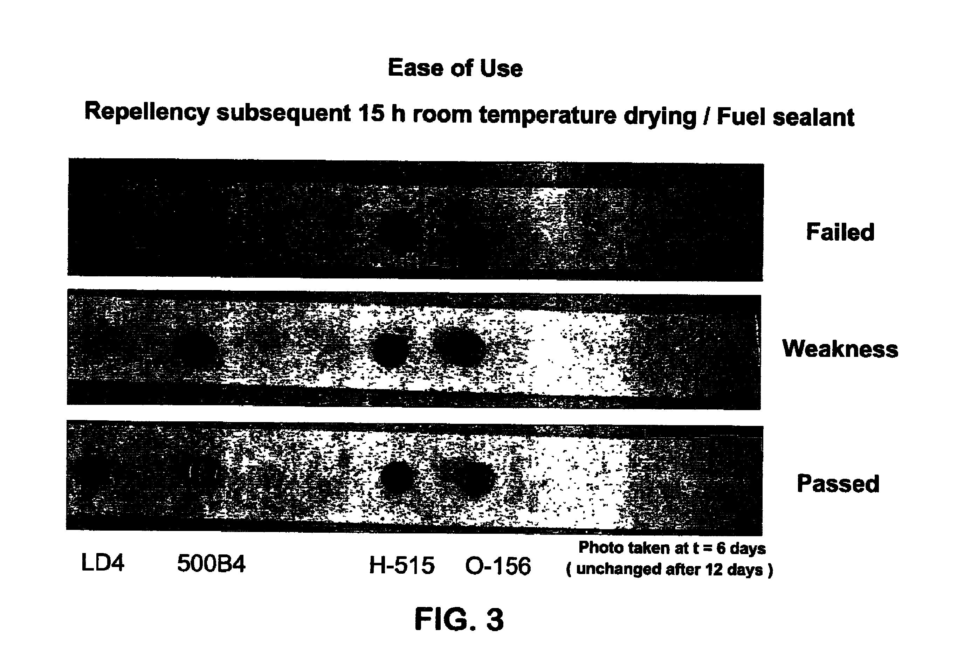

The polyperfluoromethacrylate solution is preferably applied to the ePTFE by a dip coating operation as illustrated in Figure 2. One advantage of the coating of the present invention is that it is easily and quickly dried. For example, after 15 hours of air drying, the polyperfluoromethacrylate-coated ePTFE is repellent to a hydraulic fluids and oils as illustrated in Figure 3. In Figure 3, the polyperfluoromethacrylate-coated sample is labeled "23 RT" and shows repellency of phosphate ester hydraulic fluids ("LD4' and "500B4" in the figure), hydrocarbon hydraulic fluid ("H-515" in the figure), and ester based engine oil ("0-166" in the figure). The presence of the drop of liquid on the surface of the sample in the figure indicates the sample's repellency to that drop. As shown in Figure 3, comparative examples of alternative coatings (labeled "12 RT" and "14 RT" in the figure, which are samples 12-8072 and 13-8270, respectively, as referenced in the tables below) failed the test or showed weakness, in either event not performing as well as the coating of the present invention.

In a preferred embodiment, the polyperfluoromethacrylate solution Includes an indicator. The indicator includes materials which exchange energy with the environment that can be detected by using electrical, optical, magnetic or particle count methods. Most preferably, the indicator is a fluorescent indicator, such as a fluorescent dye. The fluorescent indicator preferably absorbs light at 300-400 nm and emits light at 400-500 nm. Under a black light, for example, the fluorescent indicator is visible, thus allowing one to easily determine whether or not the sealant includes the polyperfluoromethacrylate with which the indicator is used. An exemplary suitable fluorescent indicator is available from Ciba Geigy under the tradename Tinopal OB.

In this preferred embodiment including a fluorescent indicator, a cosolvent is needed to adjust the polarity of the polyperfluoromethacrylate solution so that both the polyperfluoromethacrylate (in the hydrofluoroether solvent) and the fluorescent indicator stay in solution. This cosolvent is a medium or high polarity organic solvent. A preferred cosolvent for this purpose is methylene chloride, available for example from Aldrich Chemicals.

It is surprising and unexpected that a two-component coating system (comprising the active component and the indicator) can durably and effectively be used in combination with an ePTFE structure. First of all, the active component has highest effectivity if the inner porous structure of ePTFE tape or membrane is coated. By creating a homogeneous coating on the nodes and fibrils of the microstructure of ePTFE a fully functional product is generated which shows robust performance even if the microporous structure is stretched or bent by external forces. By contrast, a layered top coating has a high probability to crack during elongation, thereby exposing non-coated surface which is highly undesirable.

The second component (indicator) should preferentially be impregnated homogeneously throughout the inner porous structure in order to create a sensing membrane with long term performance. Otherwise the indicator is vulnerable to liquids that are getting in contact with it and extract the indicator from the microporous material.

A variety of coatings are oleophobic materials which are used to repel fuel, oil, fat and solvents including water. Oleophobic materials and solutions of oleophobic materials are extremely non polar. By contrast, indicators like dies show higher polarity and therefore do not intermix with oleophobic formulations. As a consequence it Is very surprising, due to polarity reasons, to create a homogeneous solvent based two-component formulation for coating purposes as discovered by the present inventor.

Another barrier for the realization of a self-indicating product is the incompatibility of many indicators or indicator/solvent formulations with low polarity ePTFE surface which has to be treated. Therefore it is highly probable that indicators will be repelled, and do not impregnate. In most cases, the impregnation of indicators is impossible due to different surface energies of ePTFE and indicator.

This invention describes microporous PTFE which had been modified with a synergistic formulation of an active component that provides additional properties to the structure, and an indicator that provides information about the presence respectively the activity of the active component.

The use of the synergistic coating formulation leads to the formation of well distributed coating layers on PTFE fibrils and nodes. As a result, a coated sealant shows improved long term performance and mechanical robustness. It has been observed that an oleophobic coating of fibrils and nodes derived from an oleophobic active component shows perfect repellency even after stretching coated ePTFE by a factor of 100%.

In addition, it has been demonstrated that by applying the synergistic formulation to ePTFE, first of all the active component shows improved long term performance and secondly the indicator shows highly improved resistance against solvent extraction.

The coated ePTFE aircraft sealant of this invention must satisfy a number of important criteria. It must be repellent (as defined by passing the various tests described below) to hydraulilc liquids and oils; it must be robust enough to maintain its repellency after bending or stressing; it must be repellant from all surfaces of the sealant, including edges; and it must be repellent in an uncompressed state and in a compressed state (this is very important because hydraulic fluid or oil may be spilled on the sealant in its uncompressed state before it is installed (compressed) and resistance even in this uncompressed state is necessary - currently available sealants do not provide this resistance).

### EXAMPLE 1

A coating composition was prepared by mixing 1000 g Fluoropel PFC 604AFA with 250 g methylene chloride and 10 mg Tinopal OB. This coating was then applied to an ePTFE material called GORE™ SKYFLEX® Aircraft Sealant (environmental sealant grade), obtained from W.L. Gore & Associates, Inc., by dip coating and heat-drying (100 degrees C for 30 minutes) as illustrated in Figure 2.

### EXAMPLE 2

A coating composition was prepared by mixing 1000 g Fluoropel PFC 604AFA with 250 g methylene chloride and 10 mg Tinopal OB. This coating was then applied to an ePTFE material imbibed with silicone called GORE™ SKYFLEX® Fuel Resistant Sealant, obtained from W.L. Gore 8 Associates, Inc., by dip coating and heat-drying (100 degrees C for 30 minutes) as illustrated in Figure 2.

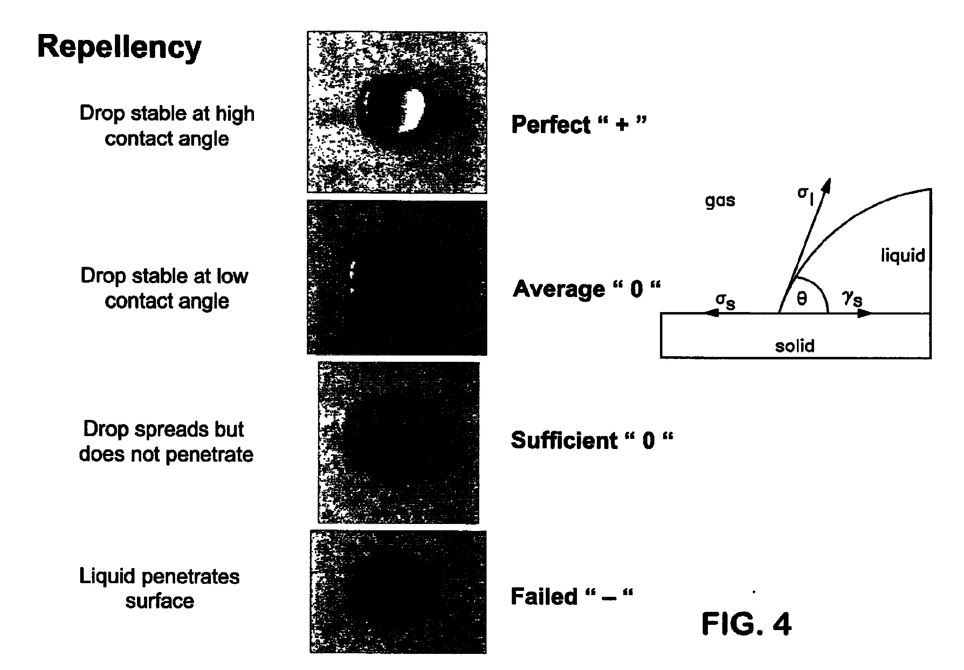

The aircraft sealant of the examples were subjected to a number of tests to determine whether they met the necessary criteria. First, the sample from Example 1 was subjected to a repellency test. In this test, the sample was exposed to drops of various liquids for 193.5 hours. As illustrated in Figure 4, if the drop was stable at a high contact angle, the sample was given a "+"; if the drop was stable at a low contact angle or the drop spreads but does not penetrate the sample, it was given a "0"; and if the drop penetrates the surface of the sample, it is given a"—". The following table summarizes the data generated for the inventive Example 1 (labeled "23-AFA" in the chart) and several comparative examples (see the subsequent table for correlation of sample numbers with material descriptions) In the table, LD4 and 500B4 are phosphate ester hydraulic fluids, H-515 is hydrocarbon hydraulic fluid, and O-156 is ester based engine oil. As can be seen, the inventive Example 1 (sample 23-AFA) was repellent to all fluids tested.

| **Sample** | **tributylphosphate** | **LD4** | **500B4** | **B-515** | **O-156** |
|---|---|---|---|---|---|
| 3-321/e | + | + | + | + | + |
| 3-321/wi | + | + | + | + | + |
| 4-9027 hydrophilic | - | - | - | 0 | + |
| 12 - 8072 | - | - | - | - | - |
| 13 - 8270 | - | - | - | - | - |
| 14-614 | + | + | + | + | + |
| 15 - 2109 | - | - | - | + | - |
| 16-2110 | - | - | - | - | + |
| 17 - 4200 | - | 0 | 0 | + | + |
| 23 - AFA | + | + | + | + | + |
| 24-A | + | + | + | + | + |
| 25 - 2010 | - | - | + | + | + |
| 26-RT | - | - | - | + | + |
| 27 - UFC | - | 0 | 0 | + | + |
| 28 - AFF | + | + | + | + | + |
| 29 - CFI | - | + | + | + | + |
| 30 - NFI | + | + | + | + | + |

Table correlating above sample numbers to material descriptions:

| Candidate | Material | Supplier | Coating solution (w/w) |
|---|---|---|---|
| 3-321/e | Zonyl 321 | Dupont | Diluted with 1.5 parts ethanol |
| 3-321/wi | Zonyl 321 | Dupont | Diluted with 1.5 parts |
| | | | Water/isopropanol |
| | | | (50:50) |
| 4-9027 | Zonyl 9027 | Dupont | as delivered |
| 12-8072 | Sifel 8072 | Shin-Etsu | Diluted with 1 part |
| | | | 1,3-bis (trifluoromethyl) |
| | | | benzene |
| 13-8270 | Sifel 8270 | Shin-Etsu | Diluted with 1 part |
| | | | 1,3-bis ((trifluoromethyl |
| | | | ) benzene |
| 14-614 | Sifel 614 | Shin-Etsu | Diluted with 1 part |
| | | | 1,3-bis (trifluoromethyl |
| | | | )benzene |
| 15-2109 | Nuva 2109 | Clariant | as delivered |
| 16-2110 | Nuva 2110 | Clariant | as delivered |
| 17-4200 | Nuva 4200 | Clariant | as delivered |
| 23-AFA | FluoroPel PFC 604AFA | Cytonix | as delivered |
| 24-A | FluoroPel PFC 604A | Cytonix | as delivered |
| 25-2010 | Lodyne 2010 | CIBA | as delivered |
| 26-RT | Baygard RT | Tanatex | as delivered |
| 27-UFC | Baygard UFC 01 | Tanatex | as delivered |
| 28-AFF | BAYGARD AFF 300% 01 | Tanatex | as delivered |
| 29-CFI | Cartafluor CFI | Clariant | as delivered |
| 30-NFI | Cartafluor NFI | Clariant | as delivered |

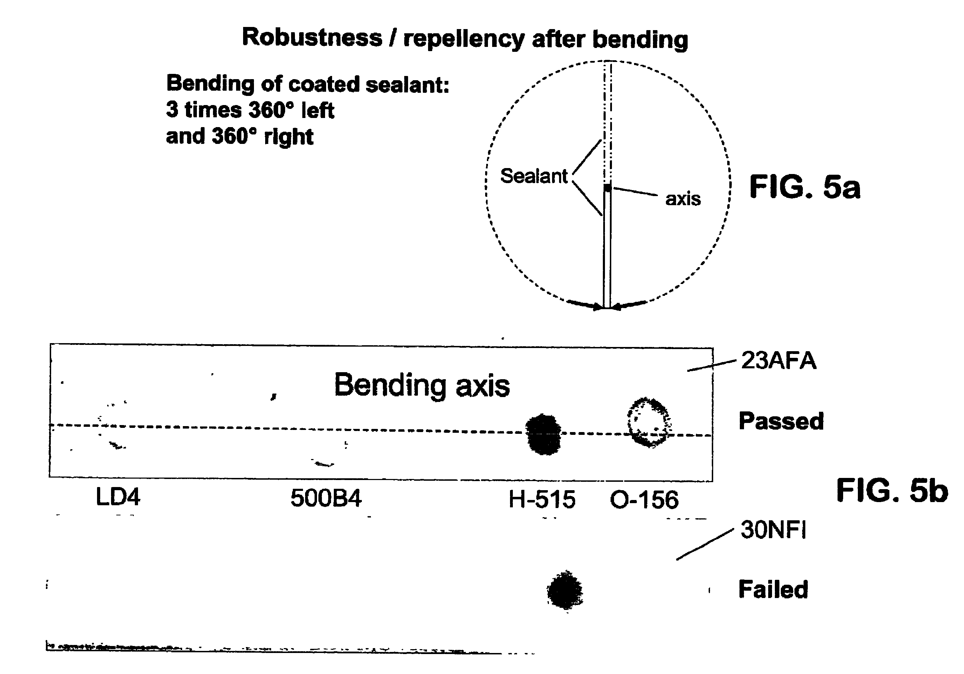

Next, the inventive Example 2 was tested for robustness. As shown in Figure 5a, the sample was bent 180 degrees over an axis, than back and forth around the axis 3 times for a full 360 degrees, and then back 180 degrees. The drop of challenge liquid was applied to the stress point (where the axis of rotation was). As illustrated in Fig. 5b, inventive Example 2 ("23-AFA") passed (all liquid drops suitably repelled), while a comparative example (which was the 30-NFI sample described above) failed.

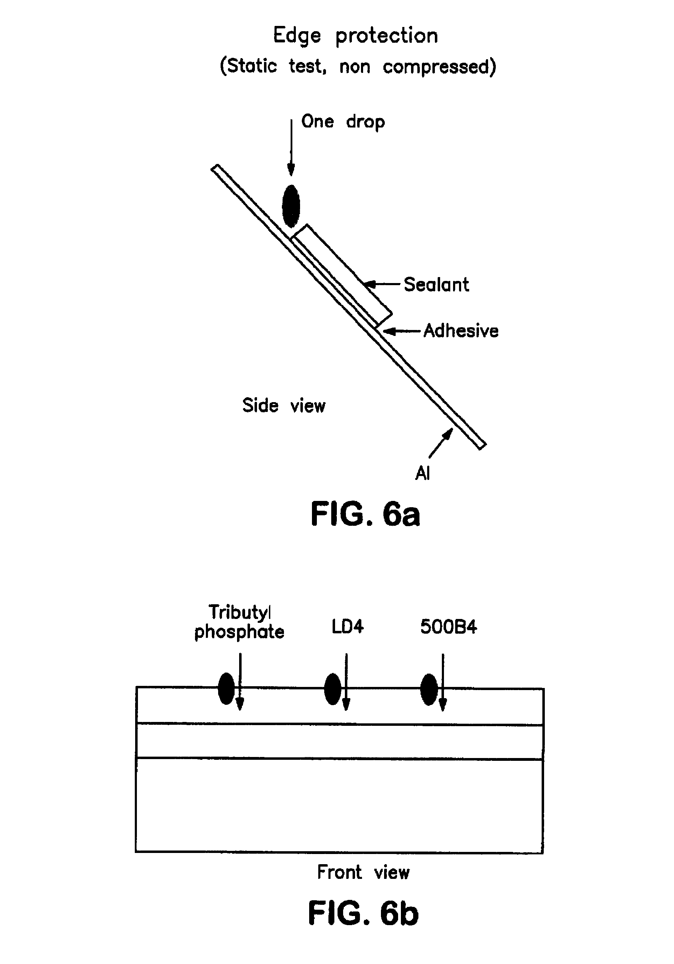

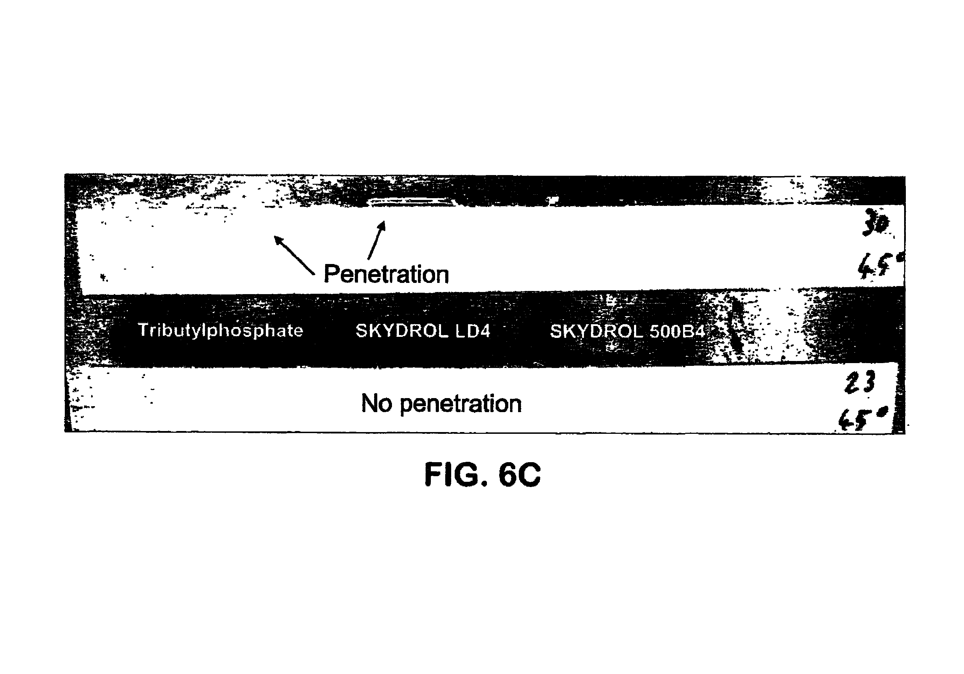

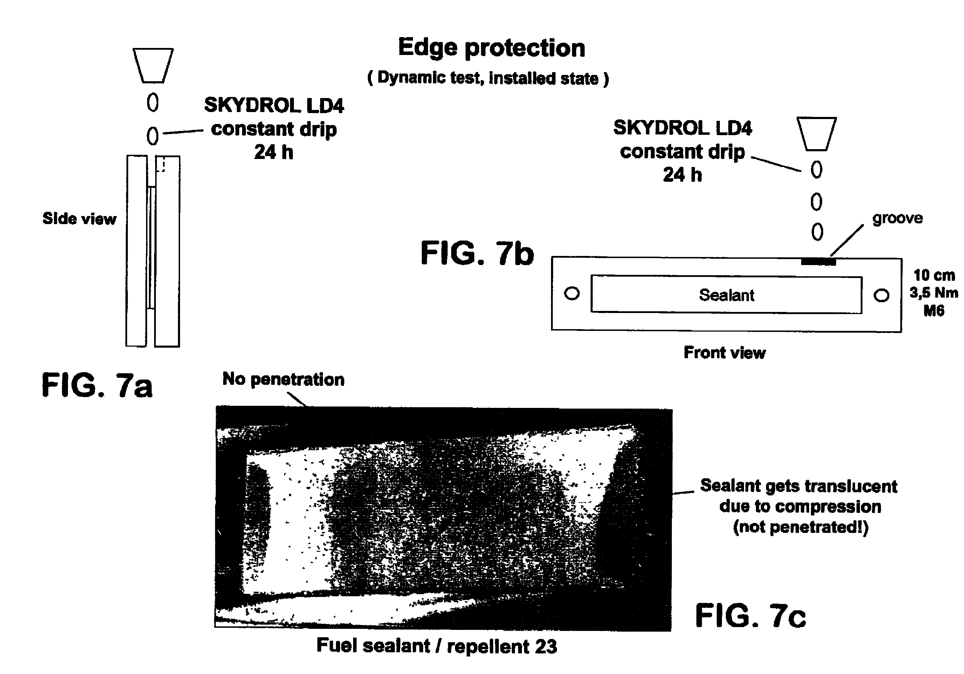

The inventive Example 2 was then tested for edge protection in both the uncompressed state (Figures 6a and 6b) and the compressed state (Figures 7a and 7b). As can be seen in Figure 6c, the inventive Example 2 passed the uncompressed test while the comparative sample (which was the 30-NFI sample described above) failed. Similarly, as shown in Fig. 7c, the inventive Example 2 showed no fluid penetration (the translucent portions of the sealant were due to effects of the compression, not penetration of the fluid).

Additional tests indicate that the sample of Example 1 has longer repellency life against more aggressive fluids than the sample of Example 2. Therefore, Example 1 represents the preferred embodiment of the invention. In addition, the inventor has surprisingly discovered that the fluorescent dye applied according to the teachings herein produces a sealant wherein the dye has an extended life as indicated in testing to be at least two months. That is, after two months of exposure to challenge liquids, the fluorescent dye is still present in the inventive articles, thereby enabling long term detection of fluid resistant protection in the sealant material. As such, applicant's invention broadly encompasses a stable coating system as described above, containing an active compound (such as the polyperfluoromethacrylate) and an indicator (such as the fluorescent indicator), wherein the indicator is durably present (for at least two months) in said coating system.

While particular embodiments of the present invention have been illustrated and described herein, the present invention should not be limited to such illustrations and descriptions. It should be apparent that changes and modifications may be incorporated and embodied as part of the present invention within the scope of the following claims.

The invention will now be described with reference to the following clauses:
Clause 1. A sealant comprising expanded polytetrafluoroethylene having a coating comprising an active hydraulic fluid repellent component and an indicator, said sealant having a first uncompressed state and a second compressed state, wherein said sealant is repellent to hydraulic fluid in both said first uncompressed state and said second compressed state.
Clause 2. A sealant as defined in clause 1 wherein said active hydraulic fluid repellent component is polyperfluoromethacrylate.
Clause 3. A sealant as defined in clause 1 wherein said indicator is a fluorescent indicator.
Clause 4. A sealant as defined in clause 1 wherein said expanded polytetrafluoroethylene is imbibed with silicone.
Clause 5. A sealant as defined in clause 1 wherein said sealant has surfaces and edges and all of said surfaces and edges are repellent to hydraulic fluid in both said first uncompressed state and said second compressed state.
Clause 6. An apparatus comprising a first aircraft panel, a second aircraft panel joined to said first aircraft panel at a joint, and a sealant as defined in clause 1 disposed at said joint.
Clause 7. A method of producing an aircraft sealant comprising the steps of providing an expanded polytetrafluoroethylene substrate, preparing a solution of polyperfluoromethacrylate in a solvent combined with an optical indicator in a cosolvent different from said solvent, coating said substrate with said solution, and heat-drying said substrate and solution coating.
Clause 8. A method as defined in clause 6 wherein said solvent is hydrofluoroether and said cosolvent is methylene chloride.
Clause 9. A coating system comprising two organic solvents with differing polarity, an active component and an indicator adapted to provide homogeneous coating on nodes and fibrils of expanded PTFE.
Clause 10. A coating system as described in clause 9 wherein said active component comprises a hydraulic fluid repellent and said indicator is a fluorescent indicator.

## Claims

1. A sealant (13) comprising expanded polytetrafluoroethylene having a coating comprising an active hydraulic fluid repellent component and an optical indicator, said sealant having a first uncompressed state and a second compressed state, wherein said sealant is repellent to hydraulic fluid in both said first uncompressed state and said second compressed state.

2. A sealant as defined in claim 1 wherein said active hydraulic fluid repellent component is polyperfluoromethacrylate.

3. A sealant as defined in claim 1 wherein said optical indicator is a fluorescent indicator.

4. A sealant as defined in claim 1 wherein said expanded polytetrafluoroethylene is imbibed with silicone.

5. A sealant as defined in claim 1 wherein said sealant has surfaces and edges and all of said surfaces and edges are repellent to hydraulic fluid in both said first uncompressed state and said second compressed state.

6. An apparatus comprising a first aircraft panel (10), a second aircraft panel (11) joined to said first aircraft panel at a joint (12), and a sealant (13) as defined in claim 1 disposed at said joint.

7. A method of producing an aircraft sealant (13) comprising the steps of providing an expanded polytetrafluoroethylene substrate, preparing a solution of polyperfluoromethacrylate in a solvent combined with an optical indicator in a cosolvent different from said solvent, coating said substrate with said solution, and heat-drying said substrate and solution coating.

8. A method as defined in claim 7 wherein said solvent is hydrofluoroether and said cosolvent is methylene chloride.

9. A coating system comprising two organic solvents with differing polarity, an active hydraulic fluid repellent component and an optical indicator adapted to provide homogeneous coating on nodes and fibrils of expanded PTFE.

10. A coating system as described in claim 9 wherein said optical indicator is a fluorescent indicator.
